# EUROPEAN PATENT APPLICATION

(11) **EP 4 535 626 A1**
(43) Date of publication of application: **09.04.2025**
(21) Application number: 23815940.4
(22) Date of filing: 25.05.2023
(51) Int. Cl.: H02K 9/19, H02K 7/14

(54) **MOTOR AND MOTOR UNIT**

(30) Priority: 31.05.2022 JP 2022089020
(71) Applicant: Yamaha Hatsudoki Kabushiki Kaisha, Iwata-shi, Shizuoka 438-8501 (JP)
(72) Inventor: KUROSAWA Shinichi, Iwata-shi, Shizuoka 438-8501 (JP); TANINO Shogo, Iwata-shi, Shizuoka 438-8501 (JP); KAMICHIKA Takuro, Iwata-shi, Shizuoka 438-8501 (JP)
(74) Representative: Stöckeler, Ferdinand
(86) International application number: PCT/JP2023/019589
(87) International publication number: WO 2023/234183

(57) **Abstract**

A motor unit 1 includes a plurality of axially connected motors 10. The motor 10 has a housing 12, in which a rotor 14 and a stator 16 are provided. Outside the housing 12, a cooling medium pump 52 is provided, at least part of which radially overlaps a stator coil 36 of the stator 16. The housing 12 has wall portions 46, 48, a total height of which is greater than an amount of protrusion of the cooling medium pump 52 from an outer surface of the housing 12. The cooling medium pump 52 has a driven gear 64 attached thereto, for engagement with a driving gear 62 attached to the rotor shaft 18. In the housing 12, on an axially opposite side to the cooling medium pump 52, a rotation sensor 70 is provided, at least part of which axially overlaps an outer perimeter portion 66 and radially overlaps an inner perimeter portion 68 of the driven gear 64 of the adjacent motor 10.

## Description

### TECHNICAL FIELD

The present invention relates to motors and motor units, and more specifically to an axially connectable motor and a motor unit including the same.

### BACKGROUND ART

As an example which is pertinent to conventional techniques of this kind, Patent Literature 1 discloses an electric motor for use in an electric vehicle. The electric motor includes a first electric motor module including a first rotor having a first rotor shaft, and a second electric motor module including a second rotor having a second rotor shaft, with the first rotor shaft and the second rotor shaft connected with each other by a shaft connecting structure in a shape-bonding fashion. Also, the electric motor has a cooling channel for a cooling medium to flow through.

### CITATION LIST

### PATENT LITERATURE

Patent Literature 1: JP-A 2021-516940

### SUMMARY OF INVENTION

### TECHNICAL PROBLEM

Patent Literature 1 discloses an electric motor including a plurality of axially connected electric motor modules, in which a cooling medium flows through a cooling channel. However, there is no description on an arrangement of providing a cooling medium pump.

Therefore, a primary object of the present invention is to provide a motor which can be configured compactly in its axial dimension even when a cooling medium pump is provided, and to provide a motor unit including the same.

### SOLUTION TO PROBLEM

According to an aspect of the present invention, there is provided an axially connectable motor including a housing; a rotor provided inside the housing and having a rotor shaft and a rotor core provided radially outside the rotor shaft; a stator provided inside the housing and having a stator core provided radially outside the rotor and a stator coil provided in the stator core; and a cooling medium pump provided in the housing and driven by rotation of the rotor shaft. With this arrangement, at least part of the cooling medium pump radially overlaps the stator coil.

In the present invention, at least part of the cooling medium pump which is provided in the housing radially overlaps the stator coil, and therefore it is possible, even when the cooling medium pump is provided, to keep an axial dimension of the motor compact, making it possible to increase the space efficiency of the housing.

Preferably, the motor further includes a wall portion provided on at least one of two axial end regions of the housing to protrude axially. With this arrangement, the cooling medium pump is provided outside the housing; and a total height of the wall portion is greater than an amount of protrusion of the cooling medium pump from an outer surface of the housing. In this case, the arrangement makes it possible to increase the space efficiency when axially connecting the motors, making it possible to connect the motors without increasing an axial dimension of the motor.

Further, preferably, the motor further includes a driving gear attached coaxially to the rotor shaft so as not to protrude axially from an end portion of the rotor shaft and driven by the rotor shaft; and a driven gear attached coaxially to the cooling medium pump and driven by engagement with the driving gear. In this case, it is possible to transmit a driving power from the rotor shaft to the cooling pump smoothly via the driving gear and the driven gear without increasing the axial dimension of the motor.

Further, preferably, the motor further includes a stator flow path to introduce a cooling medium to the stator. With this arrangement, the stator flow path includes an inlet provided on one side radially of the housing, an outlet provided on an opposing side radially of the housing, and a flow path to introduce the cooling medium from the inlet to the outlet along a coil end of the stator coil. In this case, it is possible to efficiently cool the coil end and its adjacencies by introducing the cooling medium from outside into the housing through the inlet which is provided in the housing, and to discharge the cooling medium from the outlet which is provided in the housing.

Preferably, the motor is provided with: a plurality of the inlets correspondingly to the coil end on one axial end region of the stator coil and the coil end on another axial end region of the stator coil; a plurality of the outlets correspondingly to the coil end on one axial end region of the stator coil and the coil end on another axial end region of the stator coil; and a plurality of the flow paths each providing communication between one of the inlets with a corresponding one of the outlets. In this case, it is possible to efficiently cool the coil ends and their adjacencies at both axial end regions.

Further, preferably, the motor further includes a rotor flow path axially penetrating the rotor shaft for the cooling medium to flow through the rotor. In this case, it is possible to cool the rotor, especially the rotor shaft, efficiently with a simple configuration.

Further, preferably, the motor further includes a rotor flow path for the cooling medium to flow through the rotor. With this arrangement, the rotor shaft is formed hollow, and has a partition wall dividing an interior thereof into an upstream side and a downstream side; a first through-hole provided on the upstream side of the partition wall; and a second through-hole provided on the downstream side of the partition wall. The rotor core has a bypass flow path for connecting the first through-hole with the second through-hole, and the rotor flow path is formed from an upstream-side interior of the rotor shaft, through the first through-hole, the bypass flow path and the second through-hole, to a downstream-side interior of the rotor shaft. In this case, it is possible to cool the rotor shaft and the rotor core of the rotor entirely at high efficiency.

Preferably, when a plurality of motors are connected axially, the rotor flow paths of mutually adjacent motors communicate with each other. In this case, it is possible to cool the rotor of each motor efficiently with a simple configuration.

Further, preferably, the motor further includes a housing flow path formed inside the housing in a circumferential direction to allow the cooling medium to flow inside the housing, and radially overlapping the stator core. In this case, it is possible to cool inside of the housing efficiently while contributing to cooling of the stator core.

Further, preferably, when a plurality of motors are connected axially, the housing flow paths of mutually adjacent motors are independent from each other without communicating with each other. In this case, it is possible to cool the housing appropriately for each motor.

Also, there is provided a motor unit obtained by axially connecting a plurality of the motors described above. With this arrangement, each motor further includes a rotation sensor provided in the housing on an axially opposite side to the cooling medium pump; the driven gear in each motor has an annular outer perimeter portion for engagement with the driving gear, and a truncated cone-shaped inner perimeter portion for attaching to the cooling medium pump; and at least part of the rotation sensor axially overlaps the outer perimeter portion of the driven gear in the adjacent motor, and radially overlaps the inner perimeter portion thereof.

In the present invention, it is possible, in the motor unit which is provided by an axially connected plurality of the motors each having the cooling pump and the rotation sensor, to keep an axial dimension of the motor unit compact.

It should be noted here that, in the present invention, axial and radial refer to an axial direction and a radial direction based on the rotor shaft.

The total height of the wall portion refers to, if the housing has both axial end portions formed with the wall portions, a sum of the heights of both wall portions whereas if the housing has only one of the axial end portions formed with the wall portion, the total height refers to the height of that wall portion. The height of the wall portion refers to a length of axial protrusion of the wall portion from an outer surface of the housing.

### ADVANTAGEOUS EFFECTS OF INVENTION

According to the present invention it is possible to obtain a motor which can be configured compactly in its axial dimension even when there is provided a cooling medium pump, and to provide a motor unit including the same.

### BRIEF DESCRIPTION OF DRAWINGS

Fig. 1 is an axial sectional view which shows a motor according to an embodiment of the present invention.
Fig. 2 is a side view which shows the motor in Fig. 1.
Fig. 3 is an A1-A1 illustrative sectional view of the motor in Fig. 1.
Fig. 4 is a B-B illustrative sectional view of the motor in Fig. 1.
Fig. 5 is an axial illustrative sectional view which shows a motor unit in which a plurality of the motor in Fig. 1 are axially connected.
Fig. 6 is an illustrative side view of the motor unit in Fig. 5.
Fig. 7 is an axial sectional view which shows a motor according to another embodiment of the present invention.
Fig. 8 is an A2-A2 illustrative sectional view which shows the motor in Fig. 7.
Fig. 9 is an axial sectional view which shows a motor according to still another embodiment of the present invention.
Fig. 10 is an A3-A3 illustrative sectional view which shows the motor in Fig. 9.

### DESCRIPTION OF EMBODIMENTS

Hereinafter, embodiments of the present invention will be described with reference to the drawings.

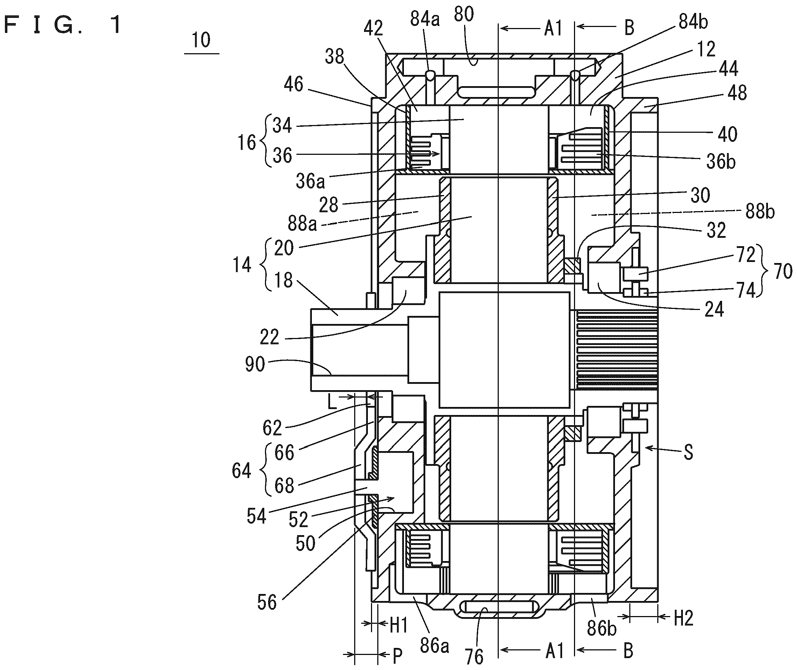

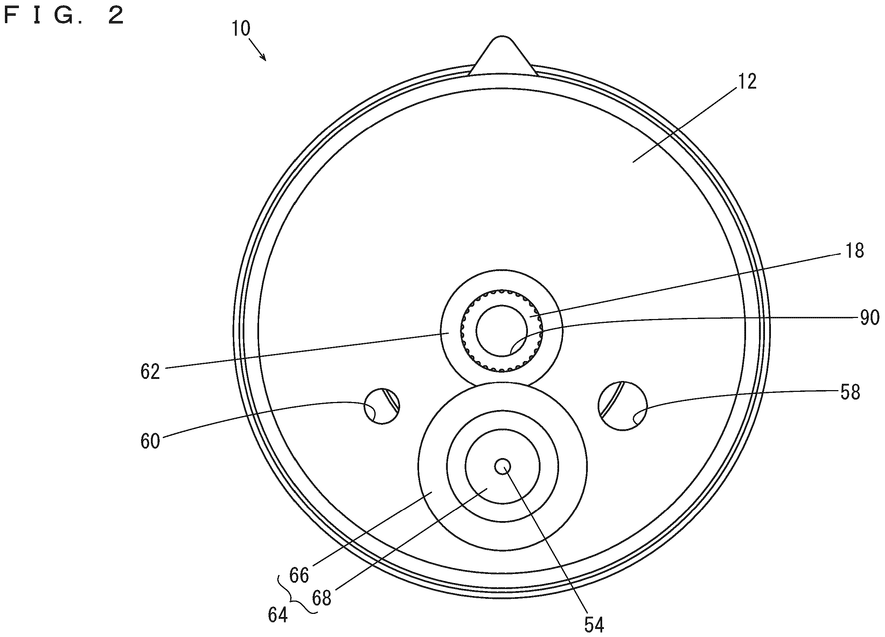

Referring to Fig. 1 and Fig. 2, a motor 10 according to an embodiment of the present invention is an axially connectable motor and includes a housing 12. Inside the housing 12, a rotor 14 and a stator 16 are provided.

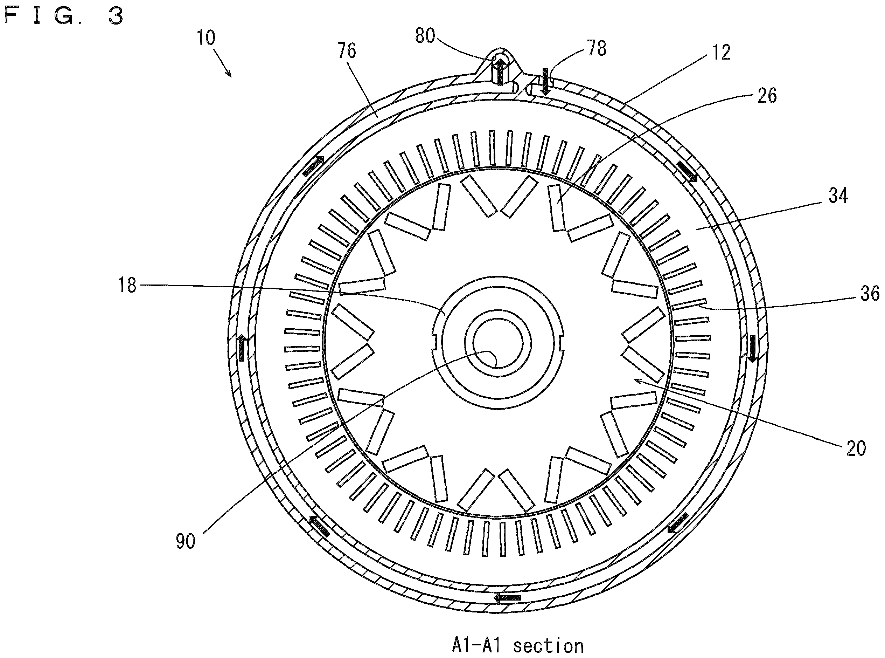

The rotor 14 has a rotor shaft 18 and a rotor core 20 provided radially outside the rotor shaft 18. The rotor shaft 18 is rotatably held by the housing 12 via bearings 22, 24. The rotor core 20 has a plurality of magnets 26 (see Fig. 3). End plates 28, 30 are disposed at two axial end portions of the rotor core 20. Also, a collar 32 is fitted around the rotor shaft 18 to prevent the rotor core 20 from dislodging.

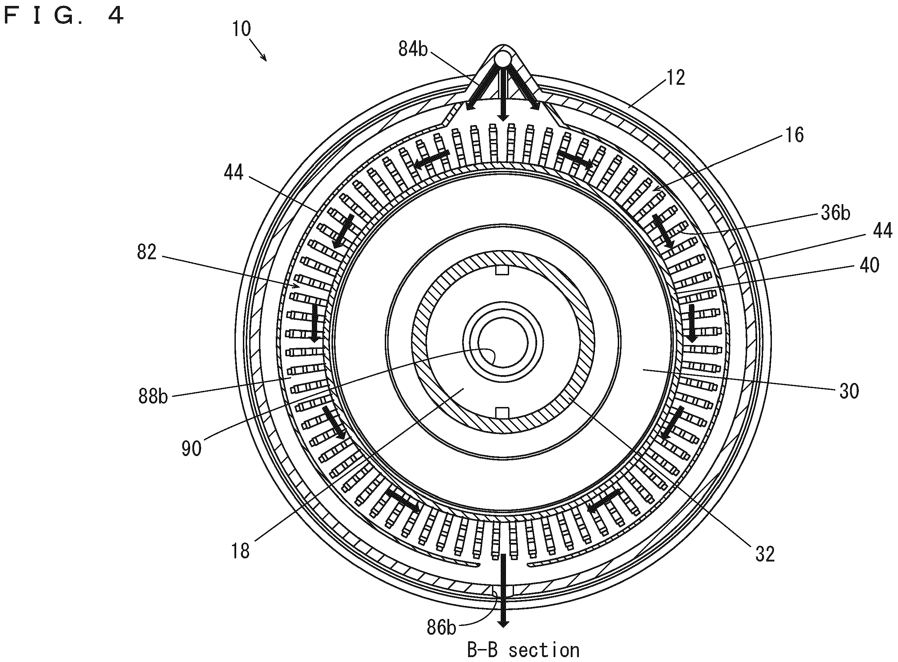

The stator 16 includes a stator core 34 which is provided radially outside the rotor 14 and is fixed to an inner circumferential surface of the housing 12, and a stator coil 36 which is wound around the stator core 34. Coil end covers 38, 40, 42, 44 are provided to cover two axial end portions of the stator coil 36, i.e., coil ends 36a, 36b. More specifically, referring to Fig. 1 and Fig. 4, the coil end cover 38 is provided to cover an inner circumference and an axial end portion of the plurality of coil ends 36a. The coil end cover 40 is provided to cover an inner circumference and an axial end portion of the plurality of coil ends 36b. Also, two coil end covers 42 are provided to cover an outer circumference of the plurality of coil ends 36a. Two coil end covers 44 are provided to cover an outer circumference of the plurality of coil ends 36b. In this arrangement, as understood from Fig. 4, the plurality of annularly disposed coil ends 36b are covered by the two coil end covers 44 except for upper and lower regions. Likewise, the plurality of annularly disposed coil ends 36a are covered by the two coil end covers 42 except for upper and lower regions.

Referring to Fig. 1, the housing 12 has two axial end portions, at which axially protruding wall portions 46, 48 are provided respectively.

At one axial end surface of the housing 12, a recess 50 is provided. In the recess 50, a cooling medium pump 52 is disposed which is driven by rotation of the rotor shaft 18. The cooling medium pump 52 is provided outside of the housing 12. At least part of the cooling medium pump 52 radially overlaps the stator coil 36. More specifically, at least part of the cooling medium pump 52 radially overlaps the coil end 36a. Also, with the wall portions 46, 48 having their height respectively represented by H1, H2, and an amount of protrusion of the cooling medium pump 52 from an outer surface of the housing 12 represented by P, a total height (H1+H2) of the wall portions 46, 48 is greater than the amount of protrusion P of the cooling medium pump 52 from the outer surface of the housing 12. The cooling pump 52 is covered by a cover 56 except for its pump shaft 54. Also, near the recess 50 of the housing 12, through-holes 58, 60 are formed (see Fig. 2) to allow cooling medium to pass through.

A driving gear 62 is attached coaxially to the rotor shaft 18 so as not to protrude axially from an end portion of the rotor shaft 18. The driving gear 62 is driven by the rotor shaft 18. A driven gear 64 is attached coaxially to the cooling medium pump 52. The driven gear 64 has an annular outer perimeter portion 66 for engagement with the driving gear 62, and a truncated cone-shaped inner perimeter portion 68 for attaching to the cooling medium pump 52. The driven gear 64 is driven in engagement with the driving gear 62, to drive the cooling medium pump 52.

In the housing 12, a rotation sensor 70 is provided on the axially opposite side to the cooling medium pump 52. The rotation sensor 70 is provided between the housing 12 and the rotor shaft 18 and configured as a resolver to detect a rotation angle of the rotor shaft 18. The rotation sensor 70 includes a resolver stator 72 attached to the housing 12, and a resolver rotor 74 attached to the rotor shaft 18.

The motor 10 as described thus far, is formed with a cooling medium flow path as will be described below. The motor 10 uses oil as a cooling medium which flows through a housing flow path 76, a stator flow path 82 and a rotor flow path 90 which will be described later.

Referring to Fig. 1 and Fig. 3, the housing flow path 76 is formed inside the housing 12 in a circumferential direction to allow the cooling medium to flow inside the housing 12. The housing flow path 76 is formed in a belt-like pattern, to radially overlap the stator core 34. The housing flow path 76 is supplied with the cooling medium from an inlet 78. After flowing through the housing flow path 76, the cooling medium is discharged from an outlet 80. The outlet 80 is formed wider than the housing flow path 76 to widen in two axial sides of the housing flow path 76.

Referring to Fig. 1 and Fig. 4, the stator flow path 82 is formed inside the housing 12 to supply the cooling medium to the stator 16. The stator flow path 82 includes a plurality (two, in the present embodiment) of inlets 84a, 84b communicating with the outlet 80 of the housing flow path 76 at one radial side of the housing 12; a plurality (two, in the present embodiment) of outlets 86a, 86b provided at an opposing radial side of the housing 12; and a plurality (two, in the present embodiment) of flow paths 88a, 88b to allow the cooling medium to flow along the coil ends 36a, 36b of the stator coil 36, from the inlets 84a, 84b to the outlets 86a, 86b. Referring to Fig. 4, the inlet 84b is provided above an upper portion of the plurality of annularly disposed coil ends 36b, i.e., a portion not covered by the two coil end covers 44, to branch in three directions. The outlet 86b is provided below a lower portion of the plurality of annularly disposed coil ends 36b, i.e., a portion not covered by the two coil end covers 44. In other words, the inlet 84b and the outlet 86b are provided to oppose each other with the rotor shaft 18 in between. The flow path 88b is formed in a region sandwiched by the coil end covers 40 and 44. The inlet 84a, the outlet 86a and the flow path 88a are formed in the same way. As described, the inlets 84a, 84b communicate with the outlet 80 of the housing flow path 76. The inlets 84a, 84b are provided correspondingly to the coil ends 36a, 36b, respectively of the stator coil 36 located there above. The outlets 86a, 86b are provided correspondingly to the coil ends 36a, 36b, respectively of the stator coil 36 located there below. The flow path 88a provides communication between the inlet 84a and the outlet 86a, while the flow path 88b provides communication between the inlet 84b and the outlet 86b. Therefore, the stator flow path 82 is supplied with the cooling medium which has passed through the housing flow path 76. After passing through the stator flow path 82, the cooling medium is discharged from the outlets 86a, 86b to the oil pan 92 (which will be described later).

Referring to Fig. 1, the rotor shaft 18 is formed hollow. In order to allow the cooling medium to flow to the rotor 14, the rotor shaft 18 is formed with an axially penetrating rotor flow path 90.

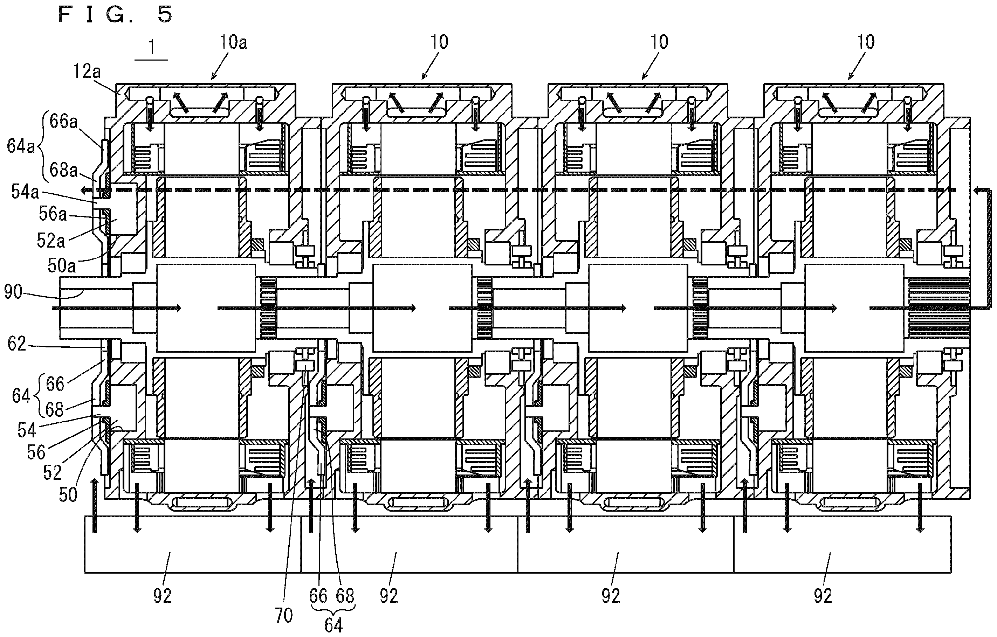

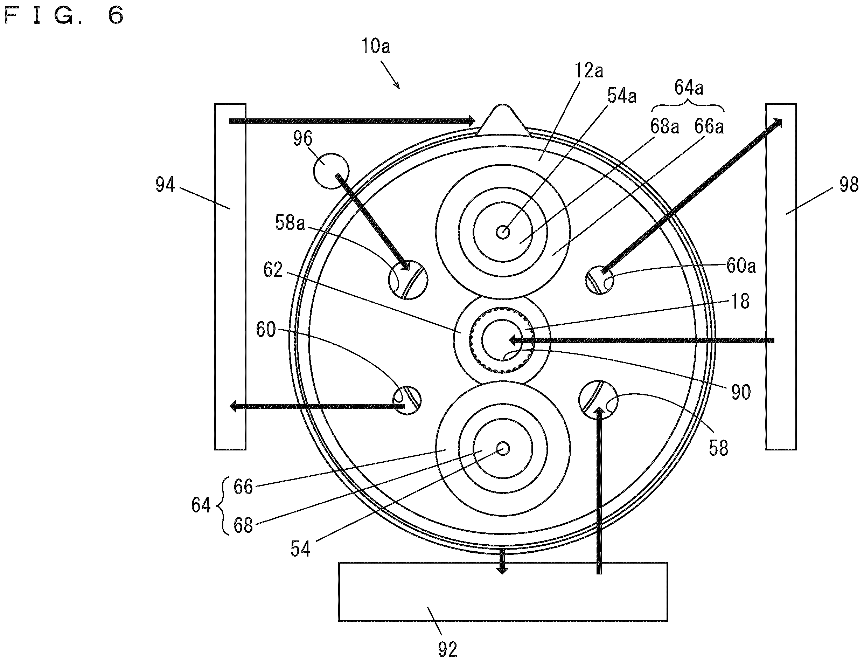

Referring to Fig. 5, a motor unit 1 includes a motor 10a and a plurality (three, in the present embodiment) of the motors 10. The motor 10a differs from the motor 10 in that it uses a housing 12a in place of the housing 12. Referring to Fig. 5 and Fig. 6, the housing 12a is formed with an additional recess 50a in an axial end surface. Near the recess 50a of the housing 12a, through-holes 58a, 60a are formed to allow the cooling medium to pass through. The recess 50a of the housing 12a is provided with a cooling medium pump 52a for distributing the cooling medium through the rotor flow path 90. The cooling pump 52a is covered by a cover 56a except for its pump shaft 54a. A driven gear 64a which is driven by the driving gear 62 is attached to the cooling medium pump 52a. The cooling medium pump 52a and the driven gear 64a are configured the same way as the cooling medium pump 52 and the driven gear 64 respectively. The driven gear 64a has an annular outer perimeter portion 66a for engagement with the driving gear 62a, and a truncated cone-shaped inner perimeter portion 68a for attaching to the cooling medium pump 52a. All the other configurations of the motor 10a are identical with those of the motor 10. The motor 10a which has been described thus far and the three motors 10 are axially connected, by inserting the rotor shaft 18 of one of the mutually adjacent motors into the rotor shaft 18 of the other, to obtain the motor unit 1.

Referring to Fig. 1 and Fig. 5, in the motor unit 1, at least part of the rotation sensor 70 axially overlaps an outer perimeter portion 66 and radially overlaps an inner perimeter portion 68 of the driven gear 64 of the adjacent motor 10. Also, in order to ensure that the inner perimeter portion 68 of the driven gear 64 of the inserting motor 10 is accommodated in a space S near the rotation sensor 70 without being blocked by the resolver stator 72 of the receiving motor 10(10a), there is provided an amount of protrusion L of the inner perimeter portion 68 of the driven gear 64 from the surface of the driving gear 62.

Referring to Fig. 5 and Fig. 6, in the motor unit 1 described thus far, an oil pan 92 is disposed below each of the motors 10 (10a). In each motor 10 (10a), the cooling medium in the oil pan 92 is sucked by the cooling medium pump 52, sent through the through-hole 58, and introduced into the cooling medium pump 52. Then, the cooling medium inside the cooling medium pump 52 is supplied to a respective one of radiators 94 through the through-hole 60, cooled there, and then supplied to the housing flow path 76 from the inlet 78 (see Fig. 3). After passing through the housing flow path 76, the cooling medium goes through the outlet 80 and the inlets 84a, 84b of the stator flow path 82, into the flow paths 88a, 88b, and after passing through the flow paths 88a, 88b, returns to the oil pan 92 via the outlets 86a, 86b (see Fig. 1 and Fig. 4). In this way, the cooling medium is cyclically supplied to the housing flow path 76 and the stator flow path 82. Also, after passing through the rotor flow path 90, the cooling medium is supplied to the cooling medium pump 52a via an external pipe 96 and the through-hole 58a, then supplied by the cooling medium pump 52a to a radiator 98 via the through-hole 60a, where it is cooled and then returned to the rotor flow path 90. In this way, the cooling medium is cyclically supplied to the rotor flow path 90. It should be noted here that although Fig. 6 shows only one radiator 94 in order to avoid complicating the drawing, but in reality, the radiator is provided for each motor.

As described, in the plurality of motors 10a, 10 connected axially, the housing flow paths 76 of mutually adjacent motors do not communicate with each other, i.e., the housing flow paths 76 are independent from each other. Likewise, the stator flow paths 82 of mutually adjacent motors are independent from each other, without communicating with each other. Also, in the plurality of motors 10, 10a connected axially, the rotor flow paths 90 of mutually adjacent motors communicate with each other.

According to the motor 10 as has been described thus far, at least part of the cooling medium pump 52 which is provided in the housing 12 radially overlaps the stator coil 36, and therefore it is possible, even when the cooling medium pump 52 is provided, to keep an axial dimension of the motor 10 compact, making it possible to increase the space efficiency of the housing 12.

The total height (H1 + H2) of the wall portions 46, 48 is greater than the amount of protrusion P of the cooling medium pump 52 from the outer surface of the housing 12. Therefore, it is possible to increase the space efficiency when axially connecting the motors 10, making it possible to connect the motors 10 without increasing an axial dimension of the motor 10.

The driving gear 62 is attached coaxially to the rotor shaft 18 so as not to protrude axially from the end portion of the rotor shaft 18, while the driven gear 64 is coaxially attached to the cooling medium pump 52. Therefore, it is possible to transmit a driving power from the rotor shaft 18 to the cooling pump 52 smoothly via the driving gear 62 and the driven gear 64 without increasing the axial dimension of the motor 10.

The stator flow path 82 includes the inlets 84a, 84b provided on one radial side of the housing 12; the outlets 86a, 86b provided on an opposing radial side of the housing 12; and the flow paths 88a, 88b to allow the cooling medium to flow from the inlets 84a, 84b to the outlets 86a, 86b along the coil ends 36a, 36b of the stator coil 36. Therefore, it is possible to efficiently cool the coil ends 36a, 36b and their adjacencies by introducing the cooling medium from outside into the housing 12 through the inlets 84a, 84b which are provided in the housing 12, and to discharge the cooling medium from the outlets 86a, 86b which are provided in the housing 12.

Each of the inlet 84a and the outlet 86a is provided correspondingly to the coil end 36a; each of the inlet 84b and the outlet 86b is provided correspondingly to the coil end 36b; the flow path 88a is formed to provide communication between the inlet 84a and the outlet 86a; and the flow path 88b is formed to provide communication between the inlet 84b and the outlet 86b. Therefore, it is possible to cool the coil ends 36a, 36b and their adjacencies efficiently.

The rotor flow path 90 is formed to penetrate the rotor shaft 18 axially. Therefore, it is possible to cool the rotor 14, especially the rotor shaft 18, efficiently with a simple configuration.

When a plurality of the motors 10 are connected axially, the rotor flow paths 90 of the mutually adjacent motors 10 communicate with each other. Therefore, it is possible to cool the rotor 14 in each motor 10 efficiently with a simple configuration.

The housing flow path 76 is formed inside the housing 12 in a circumferential direction to radially overlap the stator core 36. Therefore, it is possible to cool inside of the housing 12 efficiently while contributing to cooling of the stator core 36.

When a plurality of the motors 10 are connected axially, the housing flow paths 76 of the mutually adjacent motors 10 are independent from each other without communicating with each other. Therefore, it is possible to cool the housing 12 appropriately for each motor 10.

In each motor 10, the oil pan 92 and the radiator 94 can be used for dual purposes in supplying the cooling medium to the housing flow path 76 and the stator flow path 82.

The motor 10a also offers the functions and advantages described above for the motor 10.

Also, according to the motor unit 1 which is provided by axially connected motors 10, 10a, at least part of the rotation sensor 70 axially overlaps the outer perimeter portion 66 of the adjacent motor 10 while radially overlapping the inner perimeter portion 68 of the driven gear 64. Therefore, it is possible, in the motor unit 1, which is provided by an axially connected plurality of the motors 10, 10a each having the cooling pump 52 and the rotation sensor 70, to keep an axial dimension of the motor unit 1 compact.

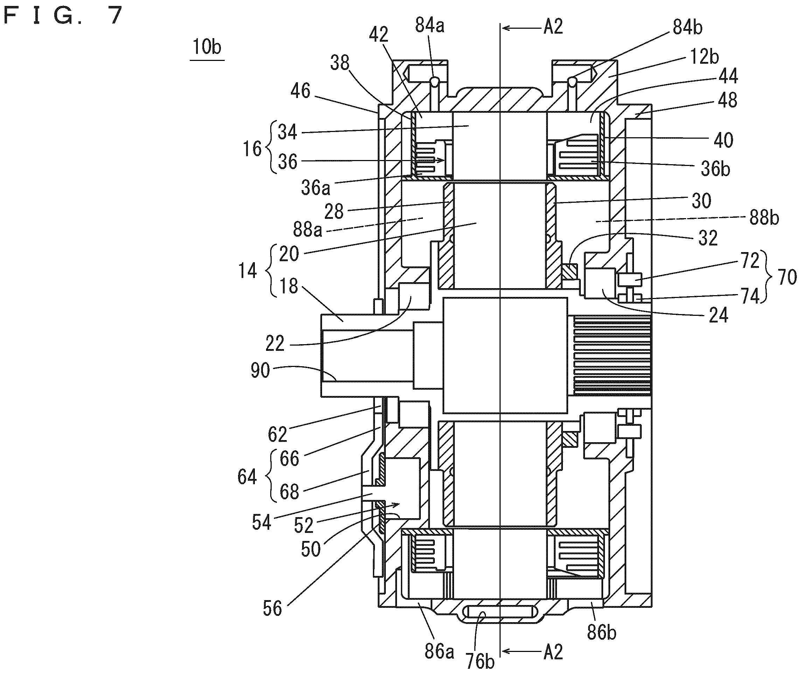

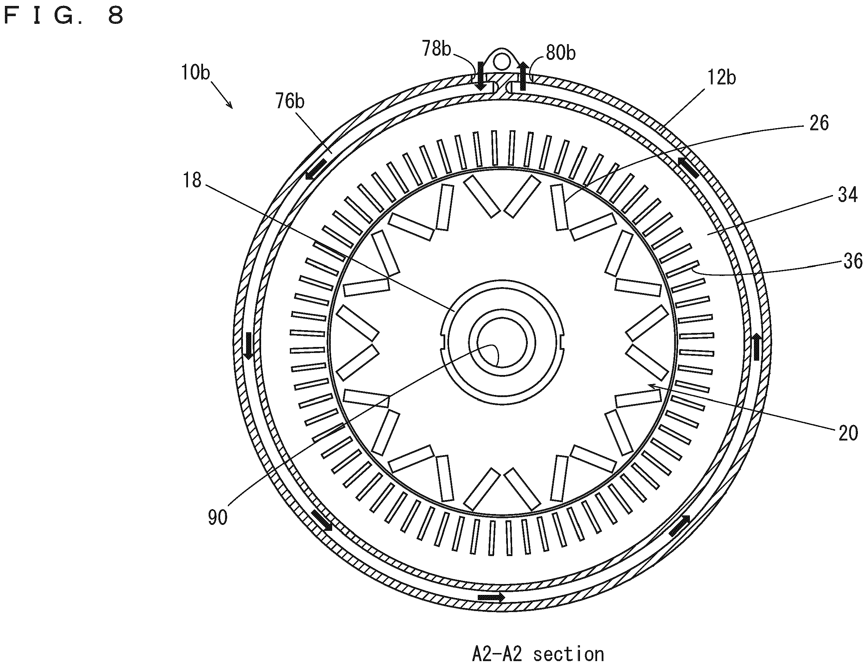

Next, description will be made for a motor 10b, which is another embodiment of the present invention, with reference to Fig. 7 and Fig. 8. In the motor 10b, oil is used as the cooling medium to flow through the stator flow path 82 and the rotor flow path 90 whereas water is used as the cooling medium to flow through a housing flow path 76b (which will be described later).

The motor 10b differs from the motor 10 in that it uses a housing flow path 76b, an inlet 78b and an outlet 80b in place of the housing flow path 76, the inlet 78 and the outlet 80, and in order to supply water to the housing flow path 76b, an unillustrated cooling medium pump and an unillustrated radiator are used separately per motor. Differing from the outlet 80, the outlet 80b does not communicate with the inlets 84a, 84b of the stator flow path 82 but communicates with the cooling medium pump. Therefore, after flowing through the housing flow path 76b, the water goes to the outlet 80b, flows through the cooling medium pump and the radiator, and then returns to the housing flow path 76b from the inlet 78b. In this way, water is cyclically supplied to the housing flow path 76b. Also, in the motor 10b, the oil from the radiator 94 is not supplied to the housing flow path 76b by the cooling medium pump 52, but is cyclically supplied to the stator flow path 82 (flow paths 88a, 88b) via the inlets 84a, 84b. All the other configurations of the motor 10b are identical with those in the motor 10, so no repetitive description will be repeated here.

According to the motor 10b as has been described, it is possible to use a cooling medium appropriate to the flow path, e.g., oil to flow through the stator flow path 82 and the rotor flow path 90 and water to flow through the housing flow path 76b.

It should be noted here that the motor 10a may also receive the same kind of modifications as have been made to change the motor 10 to the motor 10b, whereby it becomes possible to use oil for the stator flow path and the rotor flow path and use water for the housing flow path.

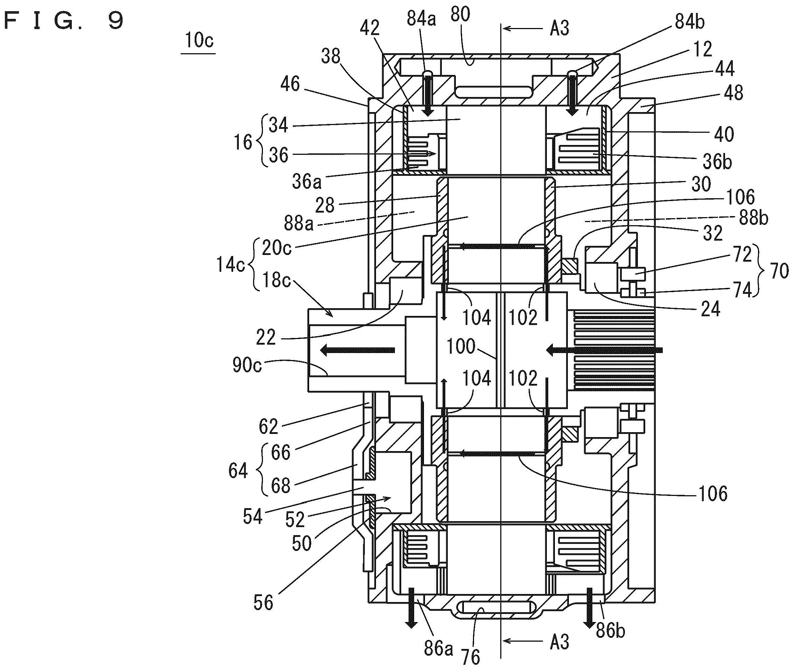

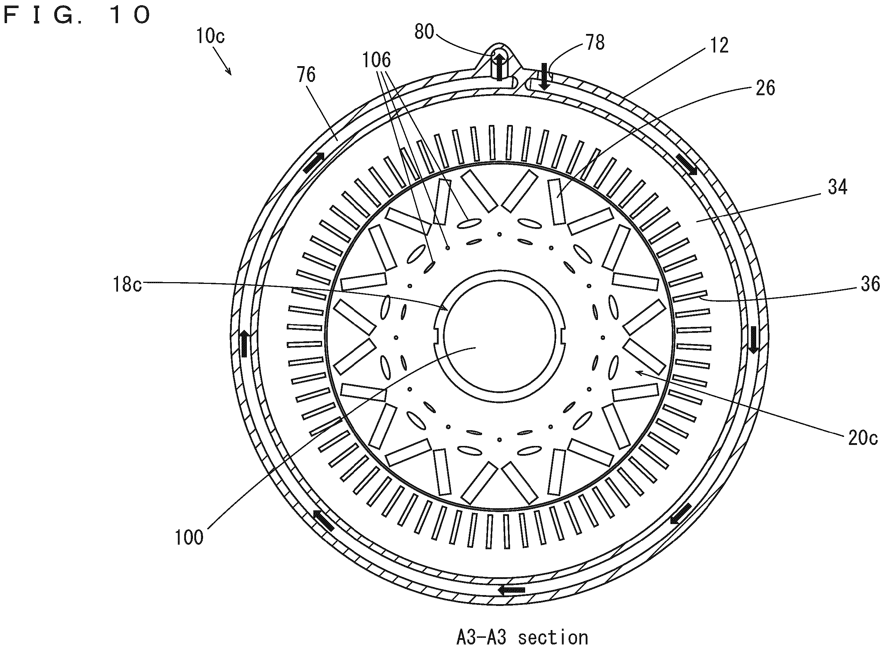

Further, description will be made for a motor 10c, which is still another embodiment of the present invention, with reference to Fig. 9 and Fig. 10.

The motor 10c uses a rotor 14c in place of the rotor 14. The rotor 14c includes a rotor shaft 18c and a rotor core 20c. The rotor shaft 18c is formed hollow, and has a partition wall 100 which divides an interior thereof into an upstream side and a downstream side; a plurality of first through-holes 102 provided on the upstream side of the partition wall 100; and a plurality of second through-holes 104 provided on the downstream side of the partition wall 100. The rotor core 20c has a plurality of bypass flow paths 106 for connecting each of the first through-holes 102 with a corresponding one of the second through-holes 104. In order to introduce a cooling medium to the rotor 14c, a rotor flow path 90c is formed from an upstream-side interior of the rotor shaft 18c, through the first through-hole 102, the bypass flow path 106 and the second through-hole 104, to a downstream-side interior of the rotor shaft 18c. All the other configurations of the motor 10c are identical with those in the motor 10, so no repetitive description will be repeated here.

According to the motor 10c as has been described, it is possible to cool the rotor shaft 18c and the rotor core 20c of the rotor 14c entirely at high efficiency.

It should be noted here that the motor 10b may also be modified like the motor 10c, i.e., the rotor shaft 18 is formed with a partition wall, first through-holes and second through-holes; the rotor core 20 is formed with bypass flow paths; and a rotor flow path is formed from an upstream-side interior of the rotor shaft 18 through the first through-hole, the bypass flow path and the second through-hole, to a downstream-side interior of the rotor shaft 18.

In the embodiments described above, the wall portions are provided on both axial end portions of the housing. However, the present invention is not limited by this. The wall portion may be provided only on one axial end portion of the housing. In this case, it is preferable that the height of the wall portion is greater than the amount of protrusion of the cooling medium pump from the outer surface of the housing.

Also, the cooling medium pump and the rotation sensor may be provided on a same axial side, i.e., together on one side or the other of the housing. In this case, it is possible to further decrease the axial dimension of the motor.

The present invention being thus far described in terms of preferred embodiments, it is obvious that these may be varied in many ways within the scope and the spirit of the present invention. The scope of the present invention is only limited by the accompanied claims.

### REFERENCE SIGNS LIST

- 1: Motor unit
- 10, 10a, 10b, 10c: Motor
- 12, 12a, 12b: Housing
- 14, 14c: Rotor
- 16: Stator
- 18, 18c: Rotor shaft
- 20, 20c: Rotor core
- 34: Stator core
- 36: Stator coil
- 36a, 36b: Coil end
- 46, 48: Wall portion
- 52, 52a: Cooling medium pump
- 62, 62a: Driving gear
- 64, 64a: Driven gear
- 66, 66a: Outer perimeter portion of driven gear
- 68, 68a: Inner perimeter portion of driven gear
- 70: Rotation sensor
- 76, 76b: Housing flow path
- 78, 78b, 84a, 84b: Inlet
- 80, 80b, 86a, 86b: Outlet
- 82: Stator flow path
- 88a, 88b: Flow path
- 90, 90c: Rotor flow path
- 100: Partition wall
- 102: First through-hole
- 104: Second through-hole
- 106: Bypass flow path
- H1, H2: Height of wall portion
- P: Amount of protrusion of cooling medium pump

## Claims

1. An axially connectable motor comprising:
a housing;
a rotor provided inside the housing and having a rotor shaft and a rotor core provided radially outside the rotor shaft;
a stator provided inside the housing and having a stator core provided radially outside the rotor and a stator coil provided in the stator core; and
a cooling medium pump provided in the housing and driven by rotation of the rotor shaft, wherein
at least part of the cooling medium pump radially overlaps the stator coil.

2. The motor according to Claim 1, further comprising a wall portion provided on at least one of two axial end regions of the housing to protrude axially, wherein
the cooling medium pump is provided outside the housing; and
a total height of the wall portion is greater than an amount of protrusion of the cooling medium pump from an outer surface of the housing.

3. The motor according to Claim 1 or 2, further comprising a driving gear attached coaxially to the rotor shaft so as not to protrude axially from an end portion of the rotor shaft and driven by the rotor shaft; and
a driven gear attached coaxially to the cooling medium pump and driven by engagement with the driving gear.

4. The motor according to one of Claims 1 to 3, further comprising a stator flow path to introduce a cooling medium to the stator, wherein
the stator flow path includes an inlet provided on one side radially of the housing, an outlet provided on an opposing side radially of the housing, and a flow path to introduce the cooling medium from the inlet to the outlet along a coil end of the stator coil.

5. The motor according to Claim 4, provided with: a plurality of the inlets correspondingly to the coil end on one axial end region of the stator coil and the coil end on another axial end region of the stator coil;
a plurality of the outlets correspondingly to the coil end on one axial end region of the stator coil and the coil end on another axial end region of the stator coil; and
a plurality of the flow paths each providing communication between one of the inlets with a corresponding one of the outlets.

6. The motor according to one of Claims 1 to 5, further comprising a rotor flow path axially penetrating the rotor shaft for the cooling medium to flow through the rotor.

7. The motor according to one of Claims 1 to 5, further comprising a rotor flow path for the cooling medium to flow through the rotor, wherein
the rotor shaft is formed hollow, and has a partition wall dividing an interior thereof into an upstream side and a downstream side; a first through-hole provided on the upstream side of the partition wall; and a second through-hole provided on the downstream side of the partition wall,
the rotor core has a bypass flow path for connecting the first through-hole with the second through-hole, and
the rotor flow path is formed from an upstream-side interior of the rotor shaft, through the first through-hole, the bypass flow path and the second through-hole, to a downstream-side interior of the rotor shaft.

8. The motor according to Claim 6 or 7, wherein when a plurality of the motors are connected axially, the rotor flow paths of mutually adjacent motors communicate with each other.

9. The motor according to one of Claims 1 to 8, further comprising a housing flow path formed inside the housing in a circumferential direction to allow the cooling medium to flow inside the housing, and radially overlapping the stator core.

10. The motor according to Claim 9, wherein when a plurality of the motors are connected axially, the housing flow paths of mutually adjacent motors are independent from each other without communicating with each other.

11. A motor unit obtained by axially connecting a plurality of the motors according to Claim 3, wherein
each motor further includes a rotation sensor provided in the housing on an axially opposite side to the cooling medium pump;
the driven gear in each motor has an annular outer perimeter portion for engagement with the driving gear, and a truncated cone-shaped inner perimeter portion for attaching to the cooling medium pump; and
at least part of the rotation sensor axially overlaps the outer perimeter portion of the driven gear in the adjacent motor, and radially overlaps the inner perimeter portion thereof.
